Europäisches Patentamt

European Patent Office

Office européen des brevets

(11) Publication number: **0 132 899**

**A2**

# EUROPEAN PATENT APPLICATION

(21) Application number: **84300128.0**

(22) Date of filing: **10.01.84**

(51) Int. Cl.⁴: **F 02 P 7/10**

(30) Priority: **03.02.83 US 463344**

(43) Date of publication of application:
**13.02.85 Bulletin 85/7**

(84) Designated Contracting States:
**DE FR GB**

(71) Applicant: **GENERAL MOTORS CORPORATION**
**General Motors Building 3044 West Grand Boulevard**
**Detroit Michigan 48202(US)**

(72) Inventor: **Bridges, David Barney**
**1214 Oakdale Drive**
**Anderson Indiana 46011(US)**

(72) Inventor: **Schulte, John Joseph**
**3315 E 8th Street**
**Anderson Indiana 46012(US)**

(74) Representative: **Breakwell, John Neil Bower et al,**
**GM Patent Section Luton Office (F6) P.O. Box No. 3**
**Kimpton Road**
**Luton Beds. LU2 0SY(GB)**

(54) **Shaft coupling.**

(57) A coupling for connecting a distributor shaft 16 of an ignition distributor to a camshaft 40 of an internal combustion engine comprises a plastics drive member 44 having a pair of drive lugs 44A that are engaged in a groove 40A formed in the end of the camshaft, the drive member also having another pair of lugs 44M that are engaged in a groove 46D formed in a metallic driven member 46 that is connected to the distributor shaft. Elastomeric sleeves 50 are disposed about these latter lugs, and torque is transmitted from the drive member to the driven member through the sleeves. The two members are secured together by arms 44K that extend from the drive member through recesses 46J formed in the driven member, the arms having tooth portions 44L engaging a wall surface 46K of the driven member.

Fig.7

SHAFT COUPLING                          0132899

This invention relates to a coupling as specified in the preamble of claim 1, for example as disclosed in US-A-1,900,208.

The invention is particularly concerned with a coupling for driving the shaft of an ignition distributor from the camshaft of an internal combustion engine, where in practice the camshaft and distributor shaft are located in a coaxial relationship with the ends of the shafts facing each other.

The problem underlying the invention is that of providing an improved coupling of the type described that can accommodate misalignment between the camshaft and distributor shaft, that is effective to reduce noise associated with drives of this type, and that is capable of damping engine torque pulsations which might otherwise be applied to the distributor shaft.

For solving this problem, a coupling in accordance with the present invention is characterised by the measures specified in the characterising portion of claim 1.

In a preferred form of coupling in accordance with the present invention, a driving member formed of plastics material has integral drive lugs extending from one face thereof that are engaged in a groove formed in the end of the camshaft. The opposite face of the plastics driving member has projecting drive lugs that are engaged within aligned grooves formed in a metallic driven member that is connected to the distributor shaft. An elastomeric sleeve is disposed about each of the drive lugs that are located in the grooves of the metal driven member, whereby the transmission of torque between the members takes place through the elastomeric sleeves. The plastics driving member has flexible (resilient) arms that extend through slots formed in the metal driven member and have teeth engaging the metal driven member for securing the plastics member to the metal member. However, the arms can slide in slots formed in the metal driven member, to permit relative radial movement of the two coupling members. This radial movement is along an axis which is substantially perpendicular to the axis of the drive lugs that engage the groove in the end of the camshaft.

A coupling as described permits relative movement between the coupling members along an axis substantially perpendicular to the axis of the groove in the end of the camshaft. The elastomeric sleeves serve to damp vibration, to reduce noise associated with drives of this type, and to damp or smooth out engine torque pulsations that might otherwise be transmitted to the distributor shaft, in any relative position of the coupling members, since the elastomeric sleeves slide with the plastics member relative to the metal driven member.

In the drawings (the various Figures of which are not all to the same scale):

Figure 1 illustrates an ignition distributor connected to the camshaft of an internal combustion engine by a coupling in accordance with the present invention;

Figure 2 is an end view of the engine camshaft shown in Figure 1;

Figure 3 is a partial sectional view on line 3-3 of Figure 1, in the direction of the arrows;

Figure 4 is an end view of a coupling member that connects the end of the camshaft to the distributor shaft;

Figure 5 is a sectional view on line 5-5 of Figure 4, in the direction of the arrows;

Figures 6 and 7 are exploded perspective views of the coupling in accordance with the present invention;

Figure 8 is a side view of the coupling member shown in Figure 4;

Figure 9 is an end view of another coupling member of the coupling in accordance with the invention;

Figure 10 is a sectional view on line 10-10 of Figure 9, in the direction of the arrows;

Figure 11 is a sectional view on line 11-11 of Figure 10, in the direction of the arrows; and

Figure 12 is a partial sectional view on line 12-12 of Figure 5, in the direction of the arrows.

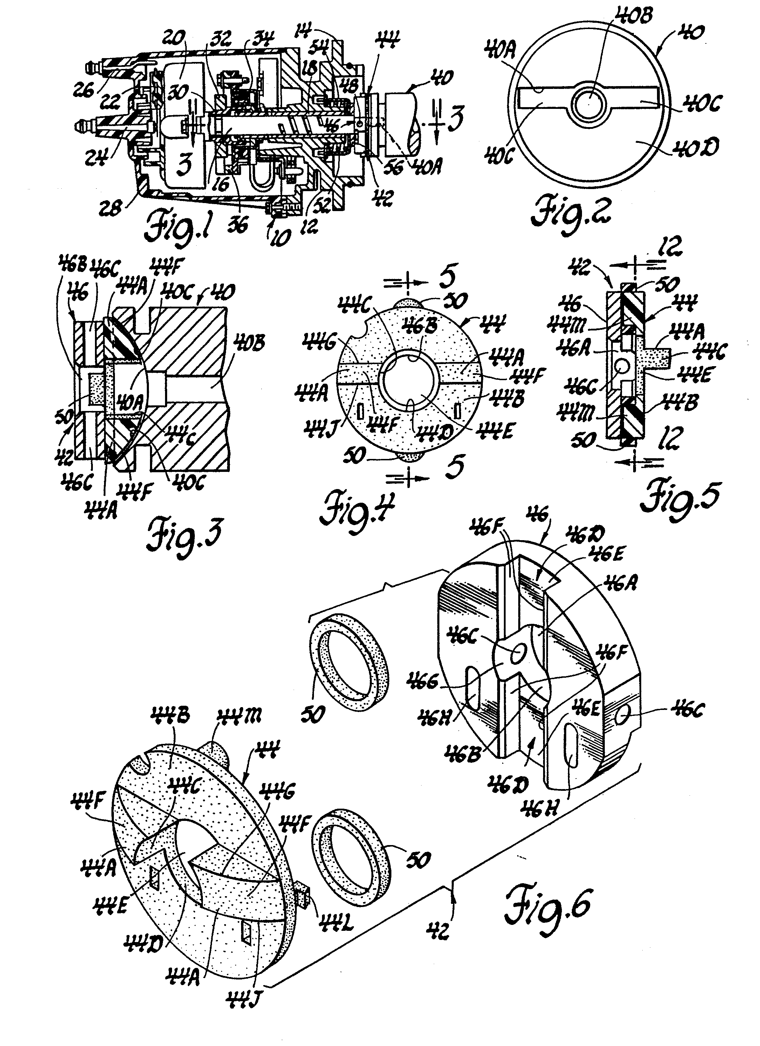

As is shown in the drawings, with reference more particularly to Figure 1, reference numeral 10 generally designates an ignition distributor for a four-cylinder internal combustion engine, the distributor having an annular metallic base portion 12 including a flange 14. The flange 14 is adapted to be secured to a housing (not shown) of the internal combustion engine in such a position that the distributor shaft 16 is aligned with the end of a camshaft 40 of the engine. The distributor shaft 16 rotates within a sleeve bearing 18 located in a bore formed in the base portion 12.

The distributor shaft 16 drives a rotor 20 having terminal means 22 that, as the rotor 20 is rotated, electrically connects a centre electrode 24 sequentially to four outer electrodes 26 carried by the distributor cap 28. The rotor 20 contains a centrifugal advance mechanism (not illustrated) which adjusts a metallic bushing 30 relative to the shaft 16 as a function of engine speed, as is well known in the art. The centrifugal advance mechanism can for example be of the type disclosed in US-A-3,923,028.

The bushing 30 carries a rotor 32 formed of magnetic material that has a plurality of external teeth. The rotor 32 forms part of a magnetic pick-up including an annular pick-up coil 34 and an annular permanent magnet 36. The pick-up coil 34 and permanent magnet are rotatably supported as a unit by the upper end of the bearing 18, and this assembly can be adjusted by a vacuum unit, not illustrated, in order to adjust spark timing in accordance with manifold vacuum, as is well known in the art. Magnetic pick-ups of the type described are illustrated for instance in the above-noted US-A-3,923,028.

The free end of the distributor shaft
16 is connected to the free end of the camshaft
40 of the internal combustion engine by means
of a coupling that is generally designated
by reference numeral 42 and will be described
in detail hereafter. The coupling comprises
annular parts 44 and 46 constituting a drive
member and a driven member respectively. The
annular coupling part 44 is formed of a moulded
plastics material such as a glass-filled
polyamide (nylon), and has a pair of integral
tang-like drive lugs 44A which extend axially
from one face 44B of the coupling part 44 and
fit within a slot-like groove 40A formed in
the end of the camshaft 40. The annular coupling
part 46 is formed of metallic material and has
circular holes that receive a tubular pin 48
which extends through the holes in the coupling
part 46 and through a radially extending hole
(not illustrated) formed in the distributor shaft
16, to interconnect the shaft 16 and the coupling
part 46. The pin 48 is press-fitted to the
holes in the coupling part 46.

With reference now more particularly
to Figures 2 and 3 of the drawings, it is seen
that the slot-like groove 40A that is formed in
the end of the camshaft 40 extends substantially
radially of the end face 40D of the camshaft
and is slightly offset from the centre axis
of the crankshaft, as illustrated. The camshaft
40 has a central oil passage 40B which intersects
the slot-like groove 40A. The inner wall portions
40C of the groove 40A comprise arcuately extending surfaces. The groove 40A can be formed by the use of a circular side-milling cutter having a diameter of approximately 50 millimetres, whereby the surfaces 40C have the shape of arcs of a circle having a radius of approximately 25 millimetres. The side walls of the groove 40A are parallel and extend normal to the arcuately extending walls 40C, as shown in Figure 1.

The coupling 42 is illustrated in detail in Figures 4 to 12 of the drawings. The drive lugs 44A of the annular coupling part 44 have inner drive lug surfaces 44C which are arcuately shaped and are extensions of portions of a circular wall 44D that defines a central opening 44E formed in the coupling part 44.

The centre line of the drive lugs 44A is radially offset from a radial centre line of the annular coupling part 44, as is best illustrated in Figure 4. The amount of offset corresponds to the amount of offset of the axis of the groove 40A of the camshaft 40 with respect to a radial centre line of the camshaft. The outer surfaces 44F of the drive lugs 44A are arcuately shaped, as arcs of a circle having a radius of approximately 22.5 millimetres. The distance between one edge 44G of the drive lugs and the face 44B is slightly greater than the distance between the other edge 44J and the face 44B, so that the outer surfaces 44F slant slightly from the edge 44G to the edge 44J, the difference in these distances being less than 0.5 millimetres.

The axial length of the drive lugs 44A from the face 44B is so related to the depth of the groove 40A of the camshaft 40 that the arcuate outer surfaces 44F are spaced slightly from the arcuate surfaces 40C when the lugs 44A are inserted into the groove 40A and the surface 44B is engaged with the end 40D of the camshaft: as an example, the surfaces may be spaced apart by a distance of about one millimetre.

The width of the camshaft groove 40A is slightly greater than the width of the drive lugs 44A. For example, the width of the groove 40A may be about 4.50 to 4.53 millimetres and the width of the drive lugs 44A about 4.39 to 4.47 millimetres.

The annular coupling part 44 further includes a pair of integral resilient locator arms 44K. The resilient arms 44K have tooth portions 44L which, as will be described, snap over the other part of the coupling to hold the coupling parts together and so prevent their axial separation.

The annular coupling part 44 further includes a pair of integral drive lugs 44M which extend in the same direction as the arms 44K. These drive lugs are oblong, and have curved end portions. The longitudinal axis of the drive lugs 44M is perpendicular to the longitudinal axis of the drive lugs 44A.

The annular part 46 constituting the driven member of the coupling 42 is formed of a metallic material, for example a sintered steel. It has a central circular opening 46A defined by a circular wall 46B, a pair of holes 46C being formed in the wall 46B for receiving the tubular pin 48. The annular part 46 has a pair of radially extending grooves 46D which are identical in form and extend from the central opening 46A to the outer periphery of the part 46. The grooves 46D have a common longitudinal axis and are rectangular in cross-section, each groove being defined by a bottom wall 46E and side-walls 46F extending normally to the wall 46E. The walls 46E and 46F of the two grooves 46D are aligned, and the two grooves 46D together with an intermediate central semi-circular portion 46G for accommodating the distributor shaft 16 can accordingly be considered to be a single groove. The annular part 46 further has a pair of oblong openings 46H extending therethrough, and a pair of through recesses 46J which have flat inner walls 46K.

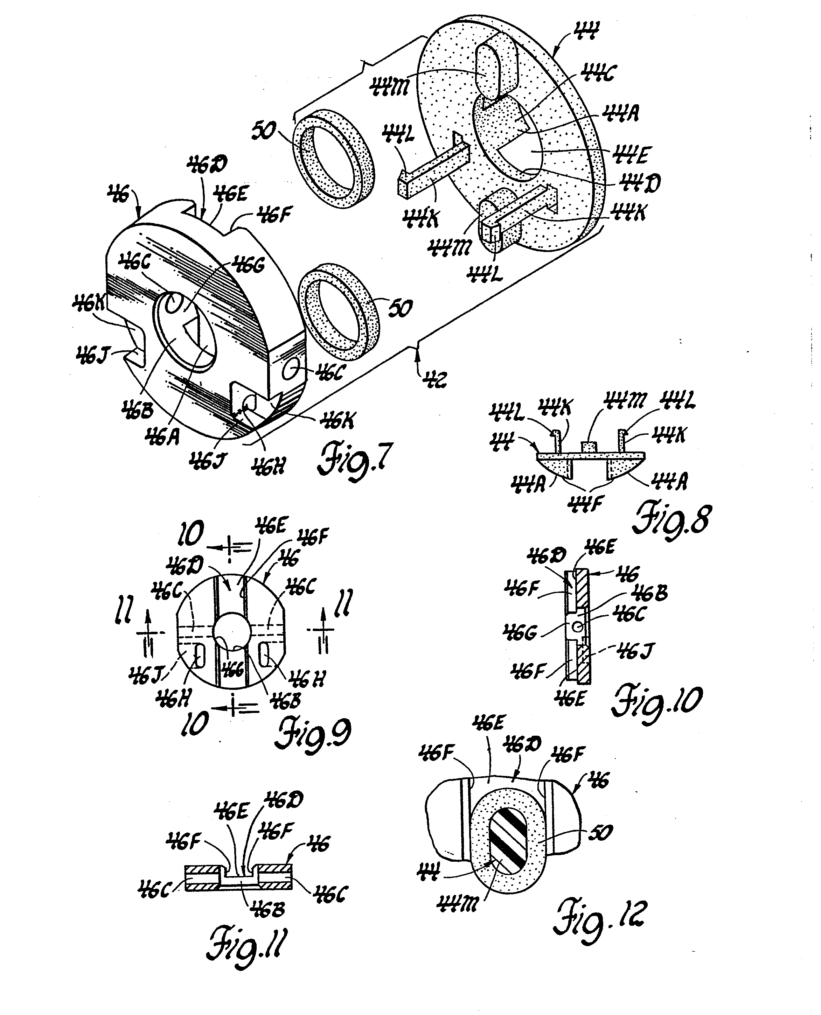

Two elastomeric sleeves, each designated by reference numeral 50, fit over respective lugs 44M of the annular coupling part 44. The sleeves are formed of a rubber elastomer, for example an epichlorohydrin-ethylene oxide copolymer: this material is oil-resistant, and has low-temperature flexibility, flame resistance and elastomeric properties similar to those of neoprene. The sleeves are shown in their unstretched circular state in Figures 6 and 7, and in a stretched assembled state in Figure 12. The sleeves have a rectangular cross-section, as illustrated in Figures 6 and 7. The axial length of the sleeves 50 is about the same as the axial length of the lugs 44M.

The method of assembling the coupling of this invention will now be described with particular reference to Figures 6 and 7. In the assembly of the coupling, the elastomeric sleeves 50 are slipped over the drive lugs 44M of the annular coupling part 44 so that after assembly they are stretched to the oblong shape illustrated in Figure 12. With the elastomeric sleeves embracing the lugs 44M, the coupling parts 44 and 46 are assembled by moving the arms 44K through the oblong openings 46H to a position in which the tooth portions 44L snap into contact with the flat inner walls 46K of the through recesses 46J in the coupling part 46. As the arms 44K pass through the oblong openings 46H they are moved towards each other, and then when the tooth portions 44L move past the walls 46K the arms 44K can spring away from each other to the position in which the tooth portions 44L engage the walls 46K. As the arms 44K are passing through the openings 46H, the drive lugs 44M, with the attached elastomeric sleeves, become positioned within the radially extending grooves 46D, and after the coupling 42 is completely assembled, as shown in Figure 5, the elastomeric sleeves are positioned within the grooves 46D, as is illustrated in Figure 12.

The width of the arms 44K is less than the length of the oblong openings 46H, so that the coupling part 46 can slide relative to the coupling part 46 along an axis aligned with the axis of the grooves 46D. During this sliding movement the lugs 44M and the elastomeric sleeves 50 carried thereby slide in the grooves
46D. By way of example, if the depth of the
grooves 46D is 3.35 to 3.50 millimetres and their
width is 7.92 to 8.08 millimetres, the axial
length of the elastomeric sleeves 50 should be
3.10 to 3.30 millimetres and the axial length
of the drive lugs 44M should be 3.15 to 3.30
millimetres. The width of the drive lugs
44M is 4.30 to 4.38 millimetres, and each lug
44M is about 7.5 millimetres long. The elastomeric sleeves 50 have a thickness of 1.89 to
2.39 millimetres. The diameter of a sleeve
as measured between inner walls of a sleeve
is about 6 millimetres. The foregoing dimensions
are such that an outer wall of elastomeric
sleeve 50 contacts the side walls 46F of the
grooves 46D, as shown in Figure 12. The
dimensions are further such that the ends of
the lugs 44M are slightly spaced from the bottom
walls 46E of groove 46D when the flat face
surfaces of the annular parts 44 and 46 are
engaged. The engagement of the elastomeric
sleeves with the groove side walls 46F provides
some slight frictional force opposing movement
of the lugs and sleeves in the grooves 46D.

When the coupling 42 is completely
assembled as shown in Figure 5, it is secured
to the end of the distributor shaft 16 by
aligning the holes 46C in the coupling part
46 with the radially extending hole in the
distributor shaft and then press-fitting the
tubular pin 48 into these holes. The end of
the distributor shaft 16 extends through the
central opening 46A in the annular coupling part 46 and partially through the central opening 44E in the coupling part 44 so that the end face of the shaft 16 is spaced slightly inwardly from the annular face 44B of the coupling part 44. The spacing is such that when the distributor is assembled to the engine the end face of the distributor shaft 16 does not contact the end wall 40D of the camshaft 40.

The coupling device 42 is spring-biased towards the end of the camshaft 40 by a spring 52 that engages a retainer member 54. The retainer member 54 engages a washer 56 which in turn engages one wall of the annular coupling part 46 of the coupling device. The retainer member is conventional, and has arms located within recesses formed in the base portion 12 to prevent rotation of the retainer member. Prior to assembly of the distributor to the engine, the spring urges the coupling 42 and the distributor shaft 16 to a position in which a portion of the metallic bushing 30 engages an end of the sleeve bearing 18.

In assembly of the distributor 10 to the engine, the flange 14 of the base portion 12 is bolted to the engine and the drive lugs 44A engage the end wall 40D of the camshaft 40. With the distributor cap 28 removed, the rotor is rotated by hand, so causing rotation of the distributor shaft 16 and coupling 42, such that eventually the drive lugs 44A snap into the slot-like groove 40A formed in the end of the camshaft 40. After final assembly, the metallic bushing 30 is out of contact with the end of the sleeve bearing 18. In the final

12

0132899

assembled position, the end face 44B of the
coupling part 44 is engaged with the end wall
40D of the camshaft 40. As previously mentioned,
the axial dimension of the drive lugs 44A is
such that the arcuate outer surfaces 44F are
slightly spaced from the arcuate walls 40C of
the slot-like groove 40A formed in the end
of the camshaft 40. The end face of the
distributor shaft 16 is slightly spaced from
the end wall 40D of the camshaft 40 so that
the ends of the two shafts do not contact
each other.

The diameter of the distributor shaft 16
is slightly less than the diameter of the central
opening 46A in the coupling part 46, to permit
proper assembly of the coupling 42 to the
distributor shaft 16. The diameter of the
distributor shaft 16 is less than the diameter
of the central opening 44E in the coupling
part 44, and the relative diameter of these
parts is selected to permit the coupling part
44 to slide radially relative to the coupling
part 46 by a predetermined amount. This
accommodates shaft misalignment along the
longitudinal axis of the grooves 46D. Shaft
misalignment along the longitudinal axis of
the drive lugs 44A is accommodated by the fact
that the groove 40A in the end of the camshaft
will properly receive the drive lugs 44A in
various relative positions of the shafts.

Voltage pulses generated in the pick-up
coil 34 are utilized to control spark timing
in a manner well known in the art. In order to
provide proper spark timing, the position of the distributor rotor 32 should consistently follow the position of the camshaft 40:that is, lost motion between the camshaft and the distributor shaft 16 should be avoided if consistent spark timing is to be achieved. The coupling of this invention minimizes lost motion, and it also compensates for torque pulsations of the engine, which are more severe in four-cylinder engines than in six or eight-cylinder engines. Lost motion is minimized due to the close fit of the drive lugs 44A with respect to the camshaft groove 40A, and further the connection between the coupling parts 44 and 46 of the coupling 42 does not permit any substantial relative rotary movement between these parts. Thus, the elastomeric sleeves 50 completely fill the space between the lugs 44M and the walls 46F of the grooves 46D, and do not compress to such an extent as to allow lost motion between the coupling parts 44 and 46. The rectangular cross-section of the elastomeric sleeves 50 helps prevent lost motion, whereas if a rubber O-ring were used instead of the sleeves 50 there would be line contact between the O-ring and the mating parts, and the O-ring could be distorted to permit lost motion between the coupling parts 44 and 46.

The elastomeric sleeves 50, as mentioned, reduce noise and also compensate for torque pulsations of the engine, inasmuch as the elastomeric sleeves in transmitting torque between the camshaft and the distributor shaft operate to damp or smooth out the torque pulsations generated by the engine, and so reduce the adverse effect of these torque pulsations on ignition timing. Without the elastomeric sleeves the torque pulsations could, among other things, cause improper operation of the centrifugal advance mechanism; in general, the application of a sharply varying torque to the distributor shaft 16 is to be avoided, for proper operation of the distributor.

As previously mentioned, the drive lugs 44A and the groove 40A in the end of the camshaft are both offset from the radial centre line of these parts. This is to ensure that the drive shaft can have only one rotary position relative to the camshaft when the drive lugs 44A are inserted in the camshaft groove 40A. The openings 46H are both located to one side of a radial centre line of part 46, so ensuring that the coupling part 44 will be assembled in the proper relationship to the coupling part 46.

Because the lugs 44M that carry the elastomeric sleeves 50 are oblong, certain lengths of each elastomeric sleeve 50 will be in contact with the parallel flat planar side walls of the lugs and with the parallel flat planar side walls 46F of the grooves 46D, as illustrated in Figure 12. This ensures face-to-face contact between the elastomeric sleeves and the side walls of the coupling parts over rectangular areas of the elastomeric sleeves, as opposed to the line contact that would occur if a rubber O-ring were used.

0132899

The purpose of the through recesses 46J is to accommodate the tooth portions 44L of the arms 44K so that the tooth portions do not interfere with face-to-face engagement of the washer 56 and the end face of the coupling part 46. In other words, the ends of the tooth portions 44L are located within the axial length of the recesses so that they do not engage the washer 56.

0132899

Claims:

1.  A coupling for transmitting drive from a drive shaft (40) to a driven shaft (16), comprising a first member (44) that is connected to rotate with the drive shaft (40) and is formed with resiliently-bushed lug means (44M) for co-operation with a respective radially extending groove (46D) in a second member (46) that is connected to rotate with the driven shaft (16), characterised in that, for driving the shaft (16) of an ignition distributor from the camshaft (40) of an internal combustion engine, the coupling comprises a first member (44) adapted to be driven by the camshaft (40) and having first lug means (44A) extending axially from one face (44B) thereof in one direction and further having second lug means (44M) extending axially in an opposite direction, the first lug means (44A) being adapted to mesh with a groove (40A) formed in the end of the camshaft (40), the longitudinal axis of the first lug means (44A) being perpendicular to the longitudinal axis of the second lug means (44M), a driven second member (46) adapted to be connected to the distributor shaft (16) and having a radially extending groove (46D) the open end of which faces the first member (44), the second lug means (44M) being located in the said groove (46D) in the second member, with an elastomeric sleeve (50) disposed about and engaging the second lug means (44M) and having outer wall portions engaging side wall portions of the groove (46D) in the second member(46), and means operative to prevent axial separation of the said members (44 and 46) while permitting radial movement of the first member (44) relative to the second member (46) along the longitudinal axis of the radially extending groove (46D) in the second member, said last-named means including means (44K, 44L) extending from one (44) of the members and engaging the other member (46).

2. A coupling according to claim 1, characterised in that the first lug means (44A) extending axially from one face (44B) of the first member (44) are adapted to be axially inserted into the groove (40A) formed in the end of the camshaft (40), and have arcuately extending outer surfaces (44F) of substantially the same shape as an inner surface (40G) of the camshaft groove (40A), the radially extending groove in the driven second member (46) is constituted by radially extending aligned groove portions (46D), and the second lug means of the first member (44) comprise a pair of axially extending radially spaced lugs (44M) provided with respective elastomeric sleeves (50) as aforesaid.

3. A coupling according to claim 2, characterised in that the second member (46) has a pair of slots (46H) extending parallel to the aligned groove portions (46D) therein, and that the means operative to prevent axial separation of the first and second members (44 and 46) comprises a pair of arms (44K) extending from the first member (44) through the slots (46H) and having portions (44L) engaging the second member (46) to prevent axial separation of the members (44 and 46), the length of the slots (46H) and the width of the arms (44K) being so dimensioned as to permit limited relative radial movement of the members (44 and 46) in a direction along the longitudinal axis of the groove portions (46D) in the second member (46).

4. A coupling according to claim 3, characterised in that the driven second member (46) has a central opening (46A) for receiving the distributor shaft (16), with the radially extending aligned groove portions (46D) intersecting the said central opening (46A) and the pair of radially spaced lugs (44M) of the first member (44) received in the respective groove portions (46D) at opposite sides of the said central opening (46A).

5. A coupling according to claim 4, characterised in that the first member (44) is formed of plastics material, with the first lug means (44A) formed integral therewith and the second lug means formed as oblong radially spaced lugs (44M) each having parallel planar side walls, the driven second member (46) is formed of metal, with the radially extending groove portions (46D) therein of rectangular cross-section, the pair of arms comprise a pair of flexible arms (44K) formed integral with the first member (44) and provided with teeth (44L) engaging the second member (46) to prevent axial separation of the members (44 and 46), and the elastomeric sleeves (50) are of rectangular cross-section and have planar outer wall portions engaging planar side wall portions of the grooves (46D) in the second member (46), the axial length of the sleeves (50) being substantially equal to the axial length of the pair of radially spaced lugs (44M).

Fig.1

Fig.2

Fig.3

Fig.4

Fig.5

Fig.6

0132899

Fig.7

Fig.8

Fig.9

Fig.10

Fig.11

Fig.12